# EUROPÄISCHE PATENTANMELDUNG

(11) **EP 3 599 524 A1**
(43) Veröffentlichungstag der Anmeldung: **29.01.2020**
(21) Anmeldenummer: 18184975.3
(22) Anmeldetag: 23.07.2018
(51) Int. Cl.: G05B 19/042

(54) **MODULARE TECHNISCHE ANLAGE**

(71) Anmelder: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Wolf, Gerrit, 76187 Karlsruhe (DE)

(57) **Zusammenfassung**

Vorgeschlagen wird ein Modul (18, 19) für eine modulare technische Anlage (16), insbesondere Prozessanlage, das wenigstens einen Aktor oder Sensor (24, 27) aufweist, und das eine Kommunikationsschnittstelle (25, 28) umfasst. Das Modul (18, 19) ist dadurch gekennzeichnet, dass das Modul (18, 19) keine Komponente zur Steuerung des wenigstens einen Aktors oder Sensors (24, 27) aufweist, und dadurch, dass in dem Modul (18, 19) Informationen hinterlegt sind, die es einer Vorrichtung (23, 26) außerhalb des Moduls (18, 19) ermöglichen, das Modul (18, 19) in der modularen technischen Anlage (16) zu betreiben.

## Beschreibung

Die Erfindung betrifft ein Modul für eine modulare technische Anlage nach Anspruch 1. Außerdem betrifft die Erfindung eine modulare technische Anlage nach Anspruch 5. Zudem betrifft die Erfindung ein Verfahren zur automatisierten Integration eines Moduls in eine modulare technische Anlage nach Anspruch 8 und die Verwendung eines Moduls zum Betrieb einer modularen technischen Anlage nach Anspruch 9.

Bei verfahrenstechnischen Anlagen spielen Flexibilität und Skalierbarkeit eine immer größere Rolle. Dies führt auf der einen Seite dazu, dass Teile der Anlagen als kleine Einheiten separat entwickelt werden und dann in größere Anlagenteile integriert werden, um spezielle Produktionsschritte durchzuführen (Flexibilität). Auf der anderen Seite können einzelne Anlagenteile flexible zu einer größeren Anlage hinzugefügt werden, um Produktionssteigerungen zu erzielen (Skalierbarkeit).

Aktuelle modulare Ansätze wie MTP (Modul Type Package) setzen für jede modulare Einheit eine eigene Automatisierung voraus. Je nach Größe der modularen Einheit kann es dabei zu einem unnötig hohen Vorhalten von Rechenleistung kommen. Zudem ist die Skalierbarkeit mit einem hohen Aufwand verbunden, da die einzelnen Module aufwändig in einem größeren Modulverbund zusammengefügt und projektiert werden müssen.

Speziell bei sehr kompakten modularen Einheiten, die beispielsweise in der Pharmazie zum Einsatz kommen, stellen sich diese Nachteile als gewichtig dar. Modularisierungskonzepte wie MTP bedürfen vor einer Inbetriebnahme der Produktionsanlage Engineering-Schritten wie dem Auslesen bestimmter Schnittstellen und typisierter Anlagenbilder für die einzelnen Module. Zudem müssen händisch Anlagenbilder erstellt, Automatisierungsprogramme ausgesteuert und Prozessabbilder für die Bedienung und Beobachtung integriert werden. Zuletzt müssen die zuvor durchgeführten Schritte noch validiert werden. Die Projektierung der gesamten Produktionsanlage gestaltet sich dadurch aufwändig, zeitintensiv und fehlerbehaftet.

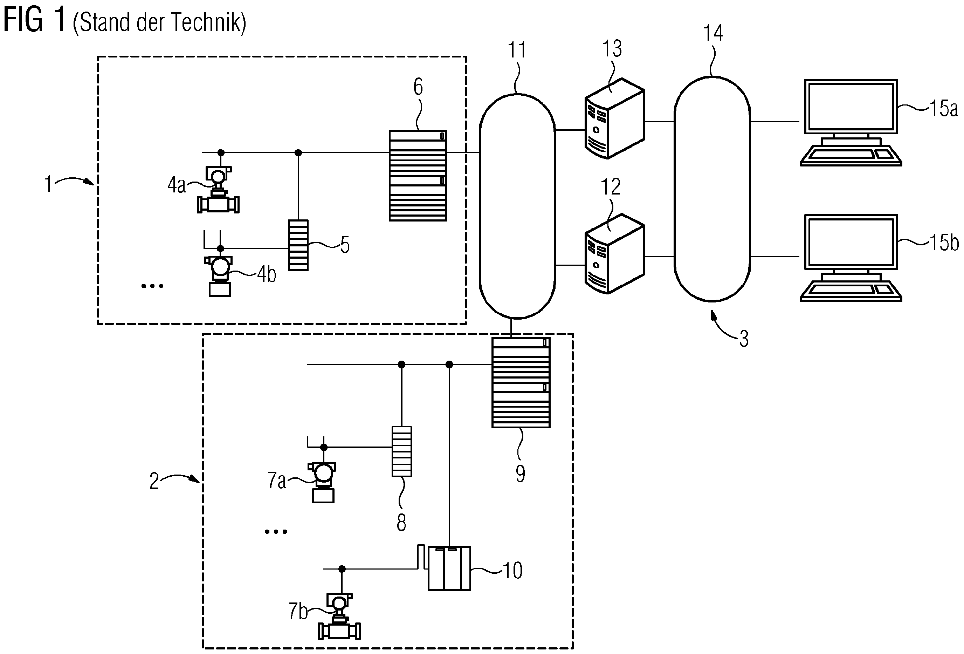

In FIG 1 ist exemplarisch die Integration eines ersten Produktionsmoduls 1 und eines zweiten Produktionsmoduls 2 in ein Leitsystem 3 einer Produktionsanlage 3 dargestellt.

Das erste Produktionsmodul 1 umfasst zu steuernde Geräte 4a, 4b, ein Input/Output-System 5 und eine aktive Automatisierungsstation 6. Ein erstes zu steuerndes Gerät 4a ist direkt mittels Profibus®-DP (dezentrale Peripherie) an die Automatisierungsstation 6 angeschlossen. Ein zweites zu steuerndes Gerät 4b ist über eine HART-Verbindung (Highway Addressable Remote Transducer) mit dem Input/Output System 5 verbunden. Das Input/Output System 5 kann beispielsweise eine SIMATIC ET 200M von SIEMENS sein. Das Input/Output System 5 ist dazu ausgebildet, die von dem zweiten zu steuernden Gerät 4b empfangenen Daten über die Profibus-Verbindung an die Automatisierungsstation 6 zu übertragen (bzw. in umgekehrter Richtung von dieser zu empfangen und an das zweite zu steuernde Gerät 4b zu übertragen).

Die Automatisierungsstation 6 führt Steuerungs- und Regelungsfunktionen für das erste Produktionsmodul 1 aktiv durch. Sie umfasst in der Regel wenigstens eine Stromversorgung, eine zentrale Recheneinheit (CPU) und Kommunikationsbaugruppen. Es kann sich bei der Automatisierungsstation 6 beispielsweise um eine SIMATIC S7-400 von SIEMENS handeln.

Das zweite Produktionsmodul 2 umfasst ebenfalls zu steuernde Geräte 7a, 7b, ein Input/Output-System 8 und eine aktive Automatisierungsstation 9. Im Gegensatz zu dem ersten Produktionsmodul 1 verfügt das zweite Gerät 7b über eine Profibus-PA (Prozess-Automation) Verbindung und benötigt daher ein Schnittstellenmodul 10, das eine Kommunikation zwischen der Profibus-PA und der Profibus-DP Verbindung ermöglicht.

Die beiden Automatisierungsstationen 6, 9 sind über einen Anlagenbus 11 mit einem ES-Server (Engineering Station) 12 und einem OS-Server 13 (Operator Station) verbunden. Bei dem Anlagenbus 11 kann es sich beispielsweise um Industrial Ethernet handeln. Die Server 12, 13 sind mittels eines Terminalbusses 14 mit Anzeige- und Bedienmitteln 15a, 15b verbunden.

Jedes Produktionsmodul 1, 2 weist gemäß dem bisherigen Verständnis eine eigene aktive Automatisierung 6, 9 auf. Nach außen hin stellen die Produktionsmodule 1, 2 "Black Boxes" dar, die in der Regel mittels einer MTP-Schnittstelle gekennzeichnet sind. Diese Schnittstelle muss jeweils durch ein entsprechendes Engineering in die gesamte Produktionsanlage integriert werden, was einen aufwändigen Prozess darstellt.

Der Erfindung liegt die Aufgabe zugrunde, ein Modul für eine modulare technische Anlage anzugeben, das sich automatisiert und auf einfache Art und Weise in die Anlage integrieren lässt, ohne dabei übermäßig Ressourcen zu verbrauchen.

Diese Aufgabe wird gelöst durch ein Modul für eine modulare technische Anlage nach Anspruch 1. Außerdem wird die Aufgabe gelöst durch eine modulare technische Anlage nach Anspruch 5. Zudem wird die Aufgabe gelöst durch ein Verfahren zur automatisierten Integration eines Moduls in eine modulare technische Anlage nach Anspruch 8 und die Verwendung eines Moduls zum Betrieb einer modularen technischen Anlage nach Anspruch 9. Vorteilhafte Weiterbildungen ergeben sich aus den abhängigen Ansprüchen.

Ein erfindungsgemäßes Modul für eine modulare technische Anlage der eingangs beschriebenen Art, insbesondere Prozessanlage, weist wenigstens einen Aktor oder Sensor auf und verfügt über eine Kommunikationsschnittstelle.

Das erfindungsgemäße Modul ist dadurch gekennzeichnet, dass das es keine Komponente zur Steuerung des wenigstens einen Aktors oder Sensors aufweist. Zudem ist es dadurch gekennzeichnet, dass in dem Modul Informationen hinterlegt sind, die es einer Vorrichtung außerhalb des Moduls ermöglichen, das Modul in der modularen technischen Anlage zu betreiben.

Bei der modularen technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist in der Regel zumindest eine Datenbank oder ein Archiv, in dem historische Daten abgespeichert sind.

Unter dem Begriff "Modul" wird eine Vorrichtung verstanden, die wenigstens einen Aktor oder Sensor aufweist. Zudem weist das Modul wenigstens eine Kommunikationsschnittstelle auf, die dazu dient, das Modul von außen zu steuern oder um innerhalb des Moduls generierte Daten nach außen zu übertragen. Die Kommunikation findet beispielsweise mit dem Leitsystem der modularen technischen Anlage oder mit anderen Modulen innerhalb der Anlage statt. Die Kommunikation kann aber auch in bzw. zu einer Cloudumgebung stattfinden. Unter einer Cloudumgebung wird dabei ein Rechnernetzwerk mit onlinebasierten Speicher- und Serverdiensten verstanden, welches üblicherweise auch als Cloud (engl. Wolke) oder Cloud-Plattform bezeichnet wird. Die in der Cloudumgebung gespeicherten Daten sind online zugänglich, sodass auch die modulare technische Anlage in der Regel über das Internet Zugriff auf ein zentrales Datenarchiv in der Cloud hat.

Erfindungsgemäß weist das Modul keine Komponente zur Steuerung des wenigstens einen Aktors oder Sensors auf. Es handelt sich daher um ein rein passives Modul. Ohne die Verschaltung des Moduls mit einem anderen Modul oder mit dem Leitsystem der modularen technischen Anlage ist das erfindungsgemäße Modul nicht in der Lage, technische Aufgaben in der technischen Anlage zu erfüllen. Allerdings sind in dem Modul Informationen hinterlegt, die es einer Vorrichtung außerhalb des Moduls ermöglichen, das Modul in der modularen technischen Anlage zu betreiben. Eine solche Vorrichtung kann beispielsweise ein anderes (aktives) Modul oder ein Leitsystem mit einer entsprechenden Steuerungsarchitektur sein. Für einen Betrieb des Moduls wird in der Regel mindestens ein Automatisierungsprogramm und ein HMI (Human Machine Interface) benötigt.

Mithilfe dieser Informationen (wenigstens Automatisierungsprogramm und HMI) lässt sich das Modul vollautomatisiert in die modulare technische Anlage integrieren.

Dabei muss das erfindungsgemäße (passive) Modul vorteilhafterweise keine Rechenkapazitäten vorhalten. Auch ist eine Skalierbarkeit der modularen technischen Anlage durch die Verwendung eines oder mehrerer erfindungsgemäßer Module deutlich einfacher, da die (passiven) Module in einem "Plug & Play" Verfahren einfach zusätzlich in die modulare technische Anlage integriert werden können.

Bevorzugt stellen die Informationen eine eindeutige Kennung des Moduls dar, mittels derer die Vorrichtung außerhalb des Moduls zusätzliche, zu einem Betrieb des Moduls benötigte Daten aus einer Datenbank außerhalb des Moduls entnehmen kann. Das passive Modul liefert dabei bei der Verbindung mit der modularen technischen Anlage eine eindeutige und unverwechselbare Identifizierung, die es der externen Vorrichtung (aktives Modul oder Leitsystem) ermöglicht, die Steuerungs- bzw. Automatisierungsaufgaben für das passive Modul vorzunehmen.

Alternativ dazu können die in dem Modul hinterlegten Informationen alle zu einem Betrieb des Moduls benötigten Daten umfassen. Ein Vorteil dieser Weiterbildung des erfindungsgemäßen Moduls ist, dass keine separate Datenbank benötigt wird. Es kann beispielsweise vorkommen, dass die Datenbank nicht immer hundertprozentig verfügbar ist. Die Integration des passiven Moduls in die modulare technische Anlage würde sich dadurch unnötig verzögern bzw. erschwert sein.

In beiden zuvor erläuterten Varianten können die zu einem Betrieb des Moduls benötigten Daten in Form eines Continuous Function Charts vorliegen, was die Integration des Moduls aufgrund der standardisierten Funktionsbeschreibungen des Moduls weiter vereinfacht.

Die obige Aufgabe wird zudem gelöst durch eine modulare technische Anlage, die insbesondere eine Prozessanalage ist. Diese Anlage weist wenigstens ein (passives) Modul wie zuvor erläutert auf. Zudem weist die modulare technische Anlage wenigstens ein zweites Modul auf, das ebenfalls wenigstens einen Aktor oder Sensor aufweist und über eine Kommunikationsschnittstelle verfügt. Zusätzlich umfasst das zweite Modul eine Steuerungskomponente zur Steuerung des wenigstens einen Aktors oder Sensors, wobei in dem zweiten Modul Informationen hinterlegt sind, die es der Steuerungskomponente ermöglichen, das zweite Modul in der technischen Anlage zu betreiben.

Mit anderen Worten wird umfasst die erfindungsgemäße modulare technische Anlage wenigstens eine zuvor erläutertes passives Modul und wenigstens ein aktives Modul.

Vorteilhafterweise ist die Steuerungskomponente des zweiten Moduls dabei dazu ausgebildet und vorgesehen, mittels der in dem ersten Modul hinterlegten Informationen das erste Modul zu betreiben.

Zusätzlich oder alternativ kann die Anlage eine Steuerungsvorrichtung außerhalb des wenigstens einen ersten Moduls und des wenigstens einen zweiten Moduls aufweisen, die dazu ausgebildet und vorgesehen ist, mittels der in dem ersten Modul hinterlegten Informationen das erste Modul zu betreiben.

Die Aufgabe wird zudem gelöst durch ein Verfahren zur automatisierten Integration eines ersten zuvor erläuterten (passiven) Moduls in eine zuvor erläuterte modulare technische Anlage, die vorzugsweise eine Prozessanlage ist. Das Verfahren umfasst die folgenden Schritte:
a) Herstellung einer Kommunikationsverbindung zwischen dem Modul und der Steuerungskomponente eines zweiten Moduls und/oder der Steuerungsvorrichtung der modularen technischen Anlage mittels der Kommunikationsschnittstelle des ersten Moduls.
b) Auslesen der in dem ersten Modul hinterlegten Informationen, die es der Vorrichtung außerhalb des ersten Moduls ermöglichen, das erste Modul in der modularen technischen Anlage zu betreiben.
c) Automatisierte Integration der ausgelesenen Informationen in die Steuerungskomponente des zweiten Moduls und/oder in die Steuerungsvorrichtung der modularen technischen Anlage.

Im Zuge einer bevorzugten Verwendung kann das zuvor erläuterte Modul zum Betrieb einer modularen technischen Anlage, insbesondere Prozessanlage, eingesetzt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 2: ein erfindungsgemäßes (passives) Modul in einer modulare technischen Anlage als Prinzipschaubild;
- FIG 3: ein Objektmodell eines erfindungsgemäßen (passiven= Moduls; und
- FIG 4: ein Ablaufdiagramm der Integration eines erfindungsgemäßen (passiven) Moduls in eine modulare technische Anlage.

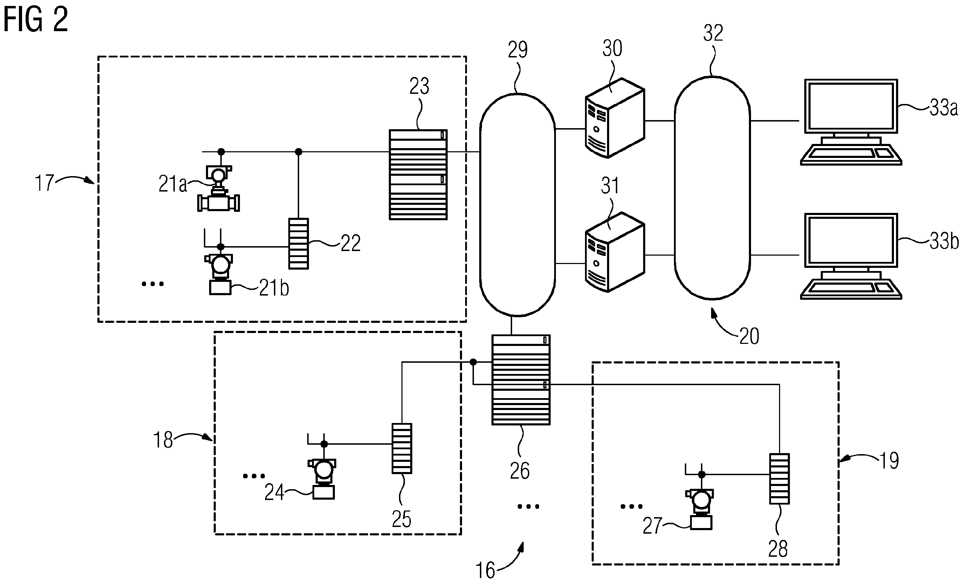

In FIG 2 ist ein Prinzipschaubild einer erfindungsgemäßen modularen technischen Anlage 16 dargestellt. Die Anlage 16 umfasst ein erstes, aktives Modul 17, ein zweites, passives Modul 18 und ein drittes, passives Modul 19. Die drei Module 17, 18, 19 sind mit einem Leitsystem 20 der modularen technischen Anlage 16 verbunden.

Das erste, aktive Modul 17 umfasst zu steuernde Geräte 21a, 21b, ein Input/Output-System 22 und eine aktive Automatisierungsstation 23. Ein erstes zu steuerndes Gerät 21a ist direkt mittels Profibus®-DP (dezentrale Peripherie) an die Automatisierungsstation 23 angeschlossen. Ein zweites zu steuerndes Gerät 21b ist über eine HART-Verbindung (Highway Addressable Remote Transducer) mit dem Input/Output System 22 verbunden. Das Input/Output System 22 kann beispielsweise eine SIMATIC ET 200M von SIEMENS sein. Das Input/Output System 22 ist dazu ausgebildet, die von dem zweiten zu steuernden Gerät 21b empfangenen Daten über die Profibus-Verbindung an die Automatisierungsstation 23 zu übertragen (bzw. in umgekehrter Richtung von dieser zu empfangen und an das zweite zu steuernde Gerät 21b zu übertragen). Da das erste Modul 17 eine eigene Automatisierungsstation 23 aufweist, spricht man hier von einem aktiven Modul 17.

Das zweite Modul 18 umfasst zu steuernde Geräte 24 (nur eines davon ist in FIG 2 dargestellt) und ein erweitertes Input/Output-System 25. Das Modul 18 weist im Gegensatz zu dem ersten, aktiven Modul 17 keine Automatisierungsstation auf. Um das Gerät 24 bzw. dessen Aktoren und/oder Sensoren zu betreiben, benötigt das zweite Modul 18 die Funktionalität einer zusätzlichen, außerhalb des zweiten Moduls 18 befindlichen Automatisierungs- bzw. Steuerungsvorrichtung 26. Man spricht daher hier von einem passiven Modul 18.

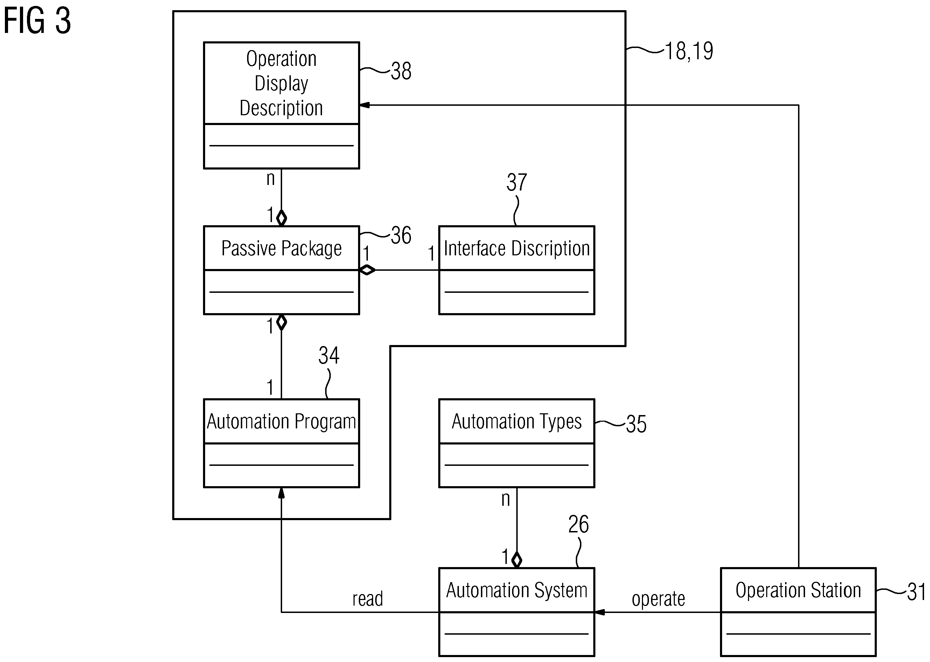

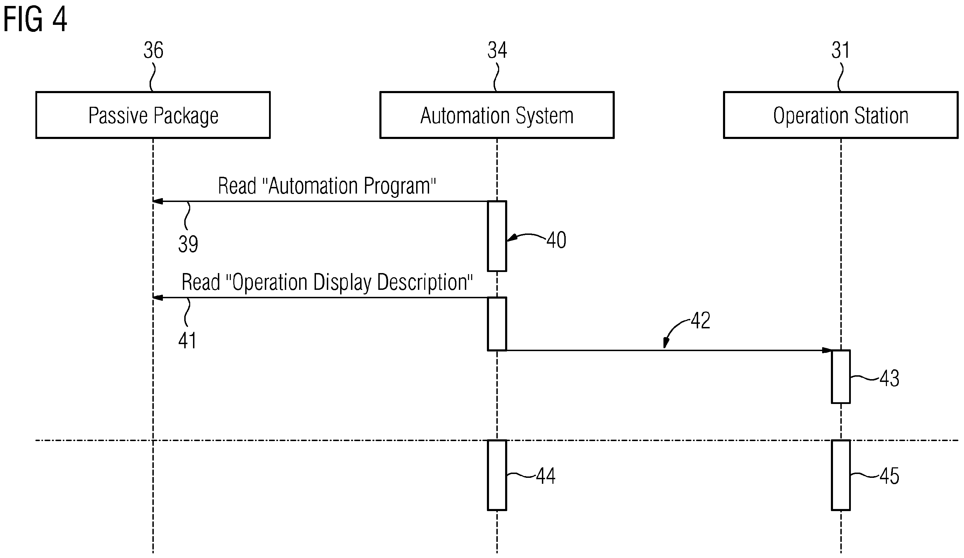

In dem erweiterten Input/Output-System 25 sind Informationen hinterlegt, die alle zu einem Betrieb des zweiten Moduls 18 benötigten Daten umfassen. Für nähere Informationen hierzu sei auf die Beschreibung der Figuren 3 und 4 verwiesen.

Das dritte Modul 19 ist baugleich zu dem zweiten Modul 18 aufgebaut und umfasst zu steuernde Geräte 27 (nur eines davon ist in FIG 2 dargestellt) und ebenfalls ein erweitertes Input/Output-System 28.

Die Automatisierungsstation 23 des ersten, aktiven Moduls 17 und die zusätzliche Automatisierungs- bzw. Steuerungsvorrichtung 26 sind über einen Anlagenbus 29 mit einem ES-Server (Engineering Station) 30 und einem OS-Server 31 (Operator Station) des Leitsystems 20 der modularen technischen Anlage 16 verbunden. Bei dem Anlagenbus 11 kann es sich beispielsweise um Industrial Ethernet handeln. Die Server 30, 31 sind mittels eines Terminalbusses 32 mit Anzeige- und Bedienmitteln 33a, 33b verbunden.

Der Ablauf einer Kopplung der passiven Module 18, 19 mit dem aktiven Modul 17 bzw. mit dem Leitsystem 20 der modularen technischen Anlage 16 erfolgt in mehreren Schritten: Zunächst wird über Profibus® DP eine Kommunikationsverbindung zwischen der zusätzlichen Automatisierungs- bzw. Steuerungsvorrichtung 26 hergestellt. Daran anschließend wird werden die für den Betrieb der Module 18, 19 benötigten Informationen aus den erweiterten Input/Output-Modulen 25, 28 gelesen. Schließlich werden die Informationen in eine Automatisierung der zusätzlichen Automatisierungs- bzw. Steuerungsvorrichtung 26 integriert.

Die Automatisierungs- bzw. Steuerungsvorrichtung 26 (als "Automation System" bezeichnet) des Leitsystems 20 wird über den OS-Server 31 gesteuert. Die Automatisierungs- bzw. Steuerungsvorrichtung 26 liest ein Automatisierungsprogramm 34, das auf den erweiterten Input/Output-Modulen 25, 28 der beiden passiven Module 18, 19 hinterlegt ist. Das Automatisierungsprogramm 34 ist in Form eines CFC (Continuous Function Chart) hinterlegt und nutzt eine bestimmte Anzahl von Automatisierungstypen 35 (z.B. Typ "Regler", Typ "Ventil" etc.).

Das Automatisierungsprogramm 34 beinhaltet zusätzlich dazugehörige Bedien- und Beobachtungsbeschreibungen (als "Passive Package" 36 bezeichnet) sowie Schnittstelleninformationen 37 (als "Interface Description" bezeichnet, z.B. mit welcher Datenstruktur die passiven Module 18, 19 angesprochen werden müssen). Die dazugehörigen Bedien- und Beobachtungsbeschreibungen 36 umfassen wiederum eine bestimmte Anzahl an Anlagenbildern 38 (als "Operation Display Description" bezeichnet).

In FIG 4 ein dazugehöriges Ablaufdiagramm der Integration der passiven Module 18, 19 in das Leitsystem 20 der modularen technischen Anlage 16 dargestellt.

Die Automatisierungs- bzw. Steuerungsvorrichtung 26 lädt in einem ersten Schritt 39 zunächst das Automatisierungsprogramm 34 der Module 18, 19. In einem zweiten Schritt 40 wird das Automatisierungsprogramm bzw. dessen Beschreibung (z.B. in Form eines CFC) in die Automatisierungs- bzw. Steuerungsvorrichtung 26 integriert. Darauf lädt die Automatisierungs- bzw. Steuerungsvorrichtung 26 lädt in einem dritten Schritt 41 die Anlagenbilder 38 aus den Modulen 18, 19 und übermittelt diese in einem vierten Schritt 42 an den OS-Server 31 des Leitsystems 20.

In einem fünften Schritt 43 erzeugt der OS-Server 31 zur Laufzeit der modularen technischen Anlage die notwendige Benutzeroberfläche. In parallel ablaufenden Schritten 44, 45 werden die Automatisierung der passiven Module 18, 19 durchgeführt und die Bedien- und Beobachtungsstation auf dem OS-Server 31 betrieben, um die Automatisierung der passiven Module 18, 19 zu überwachen.

Als Resultat lassen sich die vorprojektierten passiven Module 18, 19 zur Laufzeit der modularen technischen Anlage 16 vollautomatisiert in die Anlage 16 integrieren. Dadurch lässt sich die Flexibilität der Anlage 16 deutlich erhöhen. Zudem verringert sich der Zeitaufwand für ein Engineering der einzelnen Module 18, 19, da diese autark von den übrigen Teilen der Anlage 16 projektiert werden können.

Obwohl die Erfindung im Detail durch das bevorzugte Ausführungsbeispiel näher illustriert und beschrieben wurde, so ist die Erfindung nicht auf das offenbarte Beispiel eingeschränkt und andere Variationen können vom Fachmann hieraus abgeleitet werden, ohne den Schutzumfang der Erfindung zu verlassen.

## Patentansprüche

1. Modul (18, 19) für eine modulare technische Anlage (16), insbesondere Prozessanlage, das wenigstens einen Aktor oder Sensor (24, 27) aufweist, und das eine Kommunikationsschnittstelle (25, 28) umfasst,
**dadurch gekennzeichnet, dass**
das Modul (18, 19) keine Komponente zur Steuerung des wenigstens einen Aktors oder Sensors (24, 27) aufweist, und dass in dem Modul (18, 19) Informationen hinterlegt sind, die es einer Vorrichtung (23, 26) außerhalb des Moduls (18, 19) ermöglichen, das Modul (18, 19) in der modularen technischen Anlage (16) zu betreiben.

2. Modul (18, 19) nach Anspruch 1, bei dem die Informationen eine eindeutige Kennung des Moduls (18, 19) darstellen, mittels derer die Vorrichtung (23, 26) außerhalb des Moduls (18, 19) zusätzliche, zu einem Betrieb des Moduls (18, 19) benötigte Daten aus einer Datenbank außerhalb des Moduls (18, 19) entnehmen kann.

3. Modul (18, 19) nach Anspruch 1, bei dem die in dem Modul (18, 19) hinterlegten Informationen alle zu einem Betrieb des Moduls (18, 19) benötigten Daten umfassen.

4. Modul (18, 19) nach Anspruch 2 oder 3, bei dem die zu einem Betrieb des Moduls (18, 19) benötigten Daten in Form eines Continuous Function Charts vorliegen.

5. Modulare technische Anlage (16), insbesondere Prozessanalage, mit wenigstens einem ersten Modul (18, 19) gemäß einem der Ansprüche 1 bis 4,
und wenigstens einem zweiten Modul (1, 2, 17), das wenigstens einen Aktor oder Sensor (4a, 4b, 7a, 7b, 21a, 21b) aufweist, und das eine Kommunikationsschnittstelle (5, 10, 22) umfasst,
und das eine Steuerungskomponente (6, 9, 23, 26) zur Steuerung des wenigstens einen Aktors oder Sensors (4a, 4b, 7a, 7b, 21a, 21b) aufweist, wobei in dem zweiten Modul (1, 2, 17) Informationen hinterlegt sind, die es der Steuerungskomponente (6, 9, 23, 26) ermöglichen, das zweite Modul (1, 2, 17) in der technischen Anlage (16) zu betreiben.

6. Modulare technische Anlage (16) nach Anspruch 5, bei der die Steuerungskomponente (6, 9, 23) des zweiten Moduls (1, 2, 17) dazu ausgebildet und vorgesehen ist, mittels der in dem ersten Modul (18, 19) hinterlegten Informationen das erste Modul (18, 19) zu betreiben.

7. Modulare technische Anlage (16) nach Anspruch 5 oder 6, bei der die Anlage (16) eine Steuerungsvorrichtung (26) außerhalb des wenigstens einen ersten Moduls (18, 19) und des wenigstens einen zweiten Moduls (1, 2, 17) aufweist, die dazu ausgebildet und vorgesehen ist, mittels der in dem ersten Modul (18, 19) hinterlegten Informationen das erste Modul (18, 19) zu betreiben.

8. Verfahren zur automatisierten Integration eines ersten Moduls (18, 19) gemäß einem der Ansprüche 1 bis 4 in eine modulare technische Anlage (16) nach einem der Ansprüche 5 bis 7, vorzugsweise Prozessanlage, umfassend:
a) Herstellung einer Kommunikationsverbindung zwischen dem ersten Modul (18, 19) und der Steuerungskomponente (6, 9, 23) eines zweiten Moduls (1, 2, 17) und/oder der Steuerungsvorrichtung (26) der modularen technischen Anlage (16) mittels der Kommunikationsschnittstelle (5, 10, 22) des ersten Moduls (18, 19);
b) Auslesen der in dem ersten Modul (18, 19) hinterlegten Informationen, die es einer Vorrichtung (6, 9, 23, 26) außerhalb des ersten Moduls (18, 19) ermöglichen, das erste Modul (18, 19) in der modularen technischen Anlage (16) zu betreiben;
c) Automatisierte Integration der ausgelesenen Informationen in die Steuerungskomponente (6, 9, 23) des zweiten Moduls (1, 2, 17) und/oder in die Steuerungsvorrichtung (26) der modularen technischen Anlage (16) .

9. Verwendung eines Moduls (18, 19)) gemäß einem der Ansprüche 1 bis 4 zum Betrieb einer modularen technischen Anlage (16), insbesondere Prozessanlage.
